# EUROPEAN PATENT APPLICATION

(11) **EP 3 605 161 A1**
(43) Date of publication of application: **05.02.2020**
(21) Application number: 18774597.1
(22) Date of filing: 27.03.2018
(51) Int. Cl.: G02B 5/20, B32B 7/02, B32B 17/06, C03C 27/12

(54) **LIGHT-EMITTING DISPLAY, INTERLAYER FILM FOR LAMINATED GLASS, LAMINATED GLASS, AND LIGHT-EMITTING DISPLAY SYSTEM**

(30) Priority: 30.03.2017 JP 2017068917
(71) Applicant: Sekisui Chemical Co., Ltd., Osaka-shi, Osaka 530-0047 (JP)
(72) Inventor: NAKAJIMA, Daisuke, Koka-shi Shiga 528-8585 (JP); OOTA, Yuusuke, Koka-shi Shiga 528-8585 (JP); NOHARA, Atsushi, Koka-shi Shiga 528-8585 (JP)
(74) Representative: Cabinet Beau de Loménie
(86) International application number: PCT/JP2018/012341
(87) International publication number: WO 2018/181269

(57) **Abstract**

The present invention aims to provide a thin, light, simply structured luminescent display capable of displaying a three-dimensional image under light irradiation, and an interlayer film for a laminated glass, a laminated glass, and a luminescent display system each including the luminescent display. Provided is a luminescent display including: a luminescent layer containing a luminescent material that becomes luminous in response to excitation light; and a reflecting layer that reflects visible light.

## Description

### TECHNICAL FIELD

The present invention relates to a thin, light, simply structured luminescent display capable of displaying a three-dimensional image under light irradiation, and an interlayer film for a laminated glass, a laminated glass, and a luminescent display system each including the luminescent display.

### BACKGROUND ART

Laminated glass is less likely to scatter even when fractured by external impact and can be safely used. Due to this advantage, laminated glass has been widely used in, for example, front, side, and rear windshields of vehicles including automobiles and windowpanes of aircraft, buildings, or the like. A known example of laminated glass is a type of laminated glass including at least a pair of glass plates integrated through, for example, an interlayer film for a laminated glass which contains a liquid plasticizer and a polyvinyl acetal resin.

Recently, the properties required of glass have been diversified. There are particularly great needs for glass for use in information display applications, including use in displays. For example, there has been a growing demand for head-up displays (HUDs) which present meters showing vehicle driving data (e.g., driving speed information) within the driver's visual field in the front windshield of the vehicle. In response to this, the applicant of the present application discloses, in Patent Literature 1, an interlayer film for a laminated glass containing a binder resin and at least one luminescent material selected from the group consisting of luminescent particles, a luminescent pigment, and a luminescent dye. Luminescent materials such as luminescent particles, luminescent pigments, and luminescent dyes become luminous under irradiation of light of specific wavelengths. When the interlayer film for a laminated glass containing such a luminescent material is irradiated with light, the contained luminescent particles become luminous, so that high-contrast images can be displayed.

Meanwhile, from the viewpoint of market trends associated with the widespread adoption of IT, displays capable of displaying three-dimensional images have attracted attention as a highly promising field. For example, Patent Literature 2 discloses a glazing unit including three glass sheets and at least two plastic films inserted in alternation between the glass sheets, wherein luminophores are introduced on at least one of the plastic films and/or at least one of the glass sheets. By irradiating such a glazing unit with light that excites the luminophores, three-dimensional images can be displayed.

However, to display three-dimensional images on the glazing unit disclosed in Patent Literature 2, the glazing unit needs a complicated structure that must include at least three glass sheets (glass sheet/plastic film/glass sheet/plastic film/glass sheet). As a result, the entire glazing unit is inevitably thick and heavy, and disadvantageously can be used only in limited automobiles, buildings and the like.

### CITATION LIST

### - Patent Literature

Patent Literature 1: JP 2014-24312 A
Patent Literature 2: JP 2016-509563 T

### SUMMARY OF INVENTION

### - Technical problem

The present invention aims to provide a thin, light, simply structured luminescent display capable of displaying a three-dimensional image under light irradiation, and an interlayer film for a laminated glass, a laminated glass, and a luminescent display system each including the luminescent display.

### - Solution to problem

The present invention relates to a luminescent display including: a luminescent layer containing a luminescent material that becomes luminous in response to excitation light; and a reflecting layer that reflects visible light.

The present invention is described in detail below.

The present inventors made intensive studies to find out that when a luminescent display combines a luminescent layer containing a luminescent material that becomes luminous in response to excitation light and a reflecting layer that reflects visible light, the luminescent display can display a three-dimensional image under light irradiation despite being thin, light, and simply structured. The inventors thus completed the present invention.

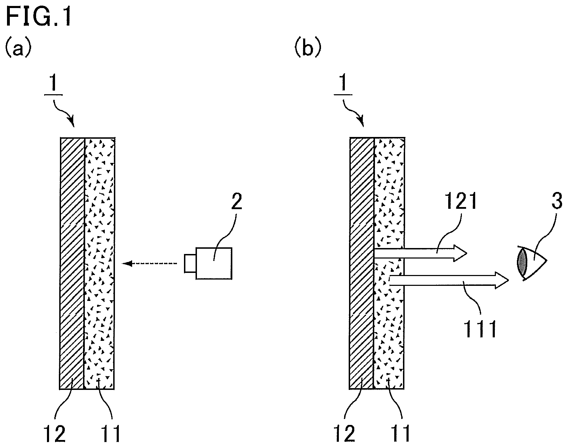

Fig. 1 includes schematic views showing an exemplary luminescent display of the present invention and illustrating the principle on which the luminescent display of the present invention displays a three-dimensional image.

In Fig. 1, a luminescent display 1 includes a luminescent layer 11 and a reflecting layer 12. The luminescent display 1 is irradiated from the luminescent layer 11 side, using a light source 2, with light including visible light and light that excites the luminescent material contained in the luminescent layer 11 (Fig. 1(a)). As a result, an image 111 formed by luminescent from the luminescent material that is made luminous by the excitation light is displayed. At the same time, an image 121 formed by the visible light reflected by the reflecting layer 12 is displayed. The image 111 and the image 121 are perceived as a three-dimensional image by a viewer 3 on the luminescent layer 11 side because the images are slightly distant from each other due to the thickness of each layer.

The luminescent layer contains a luminescent material that becomes luminous in response to excitation light. The luminescent layer itself thus becomes luminous in response tounder light irradiation, allowing an image to be displayed.

Specific examples of the luminescent material include a lanthanoid complex with a ligand containing a halogen atom because high luminescent properties can be exhibited.

Among lanthanoid complexes, the lanthanoid complex with a ligand containing a halogen atom becomes luminous at a high intensity under irradiation with light. Examples of the lanthanoid complex with a ligand containing a halogen atom include lanthanoid complexes with a monodentate ligand containing a halogen atom and lanthanoid complexes with a multidentate ligand containing a halogen atom (e.g., lanthanoid complexes with a bidentate ligand containing a halogen atom, lanthanoid complexes with a tridentate ligand containing a halogen atom, lanthanoid complexes with a tetradentate ligand containing a halogen atom, lanthanoid complexes with a pentadentate ligand containing a halogen atom, lanthanoid complexes with a hexadentate ligand containing a halogen atom).

In particular, a lanthanoid complex with a bidentate ligand containing a halogen atom or a lanthanoid complex with a tridentate ligand containing a halogen atom becomes luminous at a wavelength of 580 to 780 nm at a significantly high intensity under irradiation with light at a wavelength of 300 to 410 nm. Owing to such high-intensity luminescence, the luminescent display including a luminescent layer containing the lanthanoid complex can become luminous at a relatively high luminance even under irradiation with a low-intensity light.

In addition, the lanthanoid complex with a bidentate ligand containing a halogen atom or lanthanoid complex with a tridentate ligand containing a halogen atom is also excellent in heat resistance. In the case where the luminescent display is used as an interlayer film for a laminated glass in automobile roof glass or building window glass, for example, the automobile roof glass or building window glass is often used in a high temperature environment because it is irradiated with infrared rays in the sunlight. In such a high temperature environment, the luminescent material may be deteriorated especially at an end portion of the laminated glass. The lanthanoid complex with a bidentate ligand containing a halogen atom or a lanthanoid complex with a tridentate ligand containing a halogen atom as a luminescent material is less likely to deteriorate even in a high temperature environment.

As used herein, examples of the lanthanoid include lanthanum, cerium, praseodymium, neodymium, promethium, samarium, europium, gadolinium, terbium, dysprosium, holmium, erbium, thulium, ytterbium, and lutetium. For higher emission intensity, the lanthanoid is preferably neodymium, europium, or terbium, more preferably europium or terbium, still more preferably europium.

Examples of the bidentate ligand containing a halogen atom include ligands having a structure represented by the following formula (1) and ligands having a structure represented by the following formula (2). 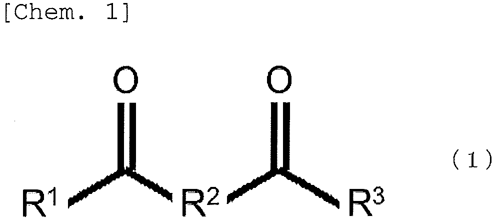
In the formula (1), R¹ and R³ each are an organic group and at least one of R¹ and R³ represents an organic group containing a halogen atom, and R² is a linear organic group having one or more carbon atoms. R¹ and R³ each are preferably a hydrocarbon group, more preferably a C1-C10 hydrocarbon group, still more preferably a C1-C5 hydrocarbon group, particularly preferably a C1-C3 hydrocarbon group. The hydrogen atoms in the hydrocarbon group may be partly substituted with an atom other than hydrogen atom or a functional group. Examples of the C1-C3 hydrocarbon group include methyl, ethyl, and propyl groups in which no hydrogen atom is substituted and methyl, ethyl, and propyl groups in which hydrogen atoms are partly substituted with a halogen atom. The halogen atom substituting a part of the hydrogen atoms in the methyl, ethyl, and propyl groups may be fluorine atom, chlorine atom, bromine atom, or iodine atom. The C1-C3 hydrocarbon group is preferably a methyl, ethyl, or propyl group in which hydrogen atoms are partly substituted with a halogen atom, with a trifluoromethyl group being more preferred, because luminescence at a high intensity can be achieved.
R² is preferably an alkylene group having one or more carbon atoms, more preferably a C1-C5 alkylene group, and most preferably a C1 methylene group. The hydrogen atoms in the alkylene group having one or more carbon atoms may be partly substituted with an atom other than hydrogen atom and a functional group.

The lanthanoid complex with a ligand containing a halogen atom is only required to have at least one ligand containing a halogen atom and may additionally have a ligand not containing a halogen atom. Examples of the ligand not containing a halogen atom include ligands having the same structure as that of the formula (1) except for not including a halogen atom and ligands having a structure represented by any of the following formulae (2) to (8). The hydrogen atoms in the ligand having a structure represented by any of the formulae (2) to (8) may be partly or entirely substituted with -COOR, -SO₃, -NO₂, -OH, an alkyl group, or -NH₂. 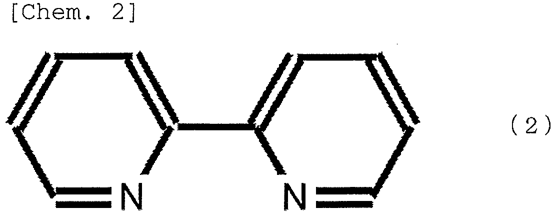 In the formula (2), two Ns may be present at any positions in the bipyridine skeleton. For example, two Ns may be present at 2- and 2'-positions, 3- and 3'-positions, 4- and 4'-positions, 2- and 3'-positions, 2- and 4'-positions, or 3- and 4'-positions. In particular, two Ns are preferably present at 2- and 2'-positions. 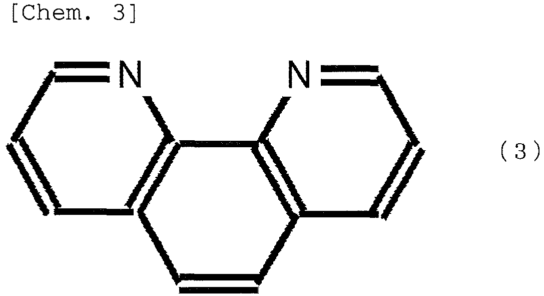 In the formula (3), two Ns may be present at any positions in the bipyridine skeleton. In particular, two Ns are preferably present at 1- and 10-positions. 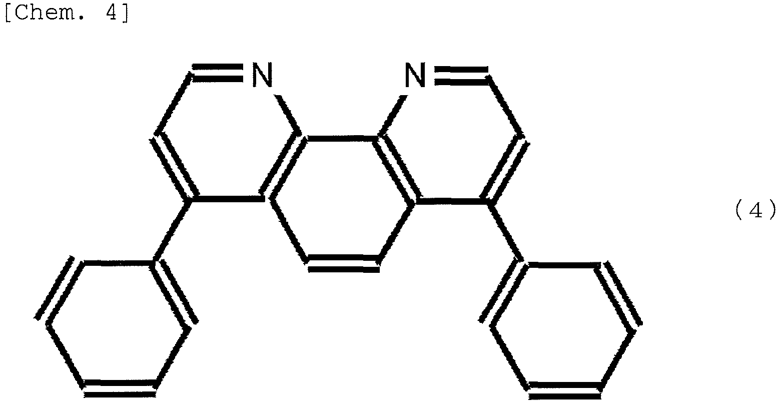 In the formula (4), two Ns may be present at any positions in the bipyridine skeleton. In particular, two Ns are preferably present at 1- and 10-positions.

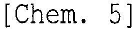

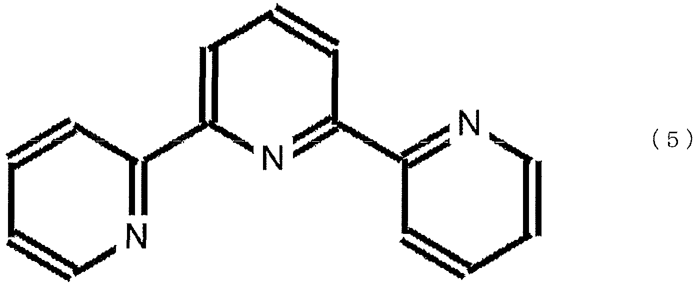

In the formula (5), three Ns may be present at any positions in the terpyridine skeleton.
[Chem. 6]

H₂N-R⁴-NH₂ (6)

In the formula (6), R⁴ at the center represents a linear organic group having one or more carbon atoms. 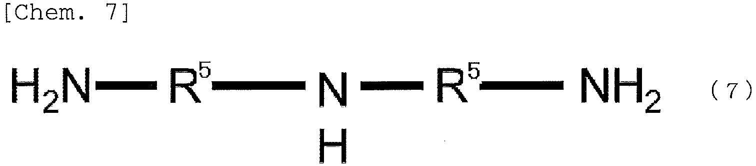 In the formula (7), two R⁵s each represent a linear organic group having one or more carbon atoms. 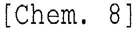 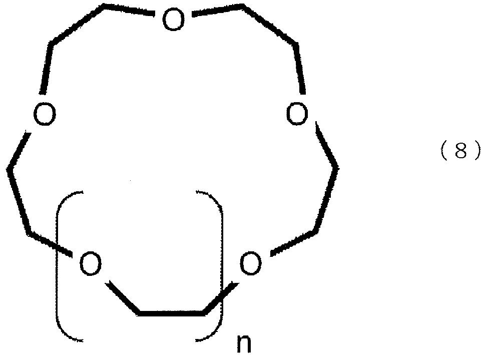 In the formula (8), n represents an integer of 1 or 2.

Examples of the lanthanoid complexes with a bidentate ligand containing a halogen atom include tris(trifluoroacetylacetone)phenanthroline europium (Eu(TFA)₃phen), tris(trifluoroacetylacetone)diphenyl phenanthroline europium (Eu(TFA)₃dpphen), tris(hexafluoroacetylacetone)diphenyl phenanthroline europium, tris(hexafluoroacetylacetone)bis(triphenylphosphine) europium, tris(trifluoroacetylacetone)2,2'-bipyridine europium, tris(hexafluoroacetylacetone)2,2'-bipyridine europium, tris(5,5,6,6,7,7,7-heptafluoro-2,4-pentanedionate)2,2'-bipyridine europium ([Eu(FPD)₃]bpy), tris(trifluoroacetylacetone)3,4,7,8-tetramethyl-1,10 phenanthroline europium ([Eu(TFA)₃]tmphen), tris(5,5,6,6,7,7,7-heptafluoro-2,4-pentanedionate)phenanthroline europium ([Eu(FPD)₃]phen), terpyridine trifluoroacetylacetone europium, and terpyridine hexafluoroacetylacetone europium.

Other examples of the lanthanoid complexes with a bidentate ligand containing a halogen atom include tris(trifluoroacetylacetone)phenanthroline terbium (Tb(TFA)₃phen), tris(trifluoroacetylacetone)diphenyl phenanthroline terbium (Tb(TFA)₃dpphen), tris(hexafluoroacetylacetone)diphenyl phenanthroline terbium, tris(hexafluoroacetylacetone)bis(triphenylphosphine)terbium, tris(trifluoroacetylacetone)2,2'-bipyridine terbium, tris(hexafluoroacetylacetone)2,2'-bipyridine terbium, tris(5,5,6,6,7,7,7-heptafluoro-2,4-pentanedionate)2,2'-bipyridine terbium ([Tb(FPD)₃]bpy), tris(trifluoroacetylacetone)3,4,7,8-tetramethyl-1,10 phenanthroline terbium ([Tb(TFA)₃]tmphen), tris(5,5,6,6,7,7,7-heptafluoro-2,4-pentanedionate)phenanthroline terbium ([Tb(FPD)₃]phen), terpyridine trifluoroacetylacetone terbium, and terpyridine hexafluoroacetylacetone terbium.

Examples of the halogen atom in the lanthanoid complex with a ligand containing a halogen atom include a fluorine atom, a chlorine atom, a bromine atom, and an iodine atom. Preferred is a fluorine atom for better stability of the ligand structure.

Among the lanthanoid complexes with a bidentate ligand containing a halogen atom or the lanthanoid complexes with a tridentate ligand containing a halogen atom, a lanthanoid complex with a bidentate ligand containing a halogen atom and having an acetylacetone skeleton is preferred because of its excellent initial luminescent properties.

Examples of the lanthanoid complex with a bidentate ligand containing a halogen atom and having an acetylacetone skeleton include Eu(TFA)₃phen, Eu(TFA)₃dpphen, Eu(HFA)₃phen, [Eu(FPD)₃]bpy, [Eu(TFA)₃]tmphen, and [Eu(FPD)₃]phen. The structures of these lanthanoid complexes with a bidentate ligand containing a halogen atom and having an acetylacetone skeleton are shown below.

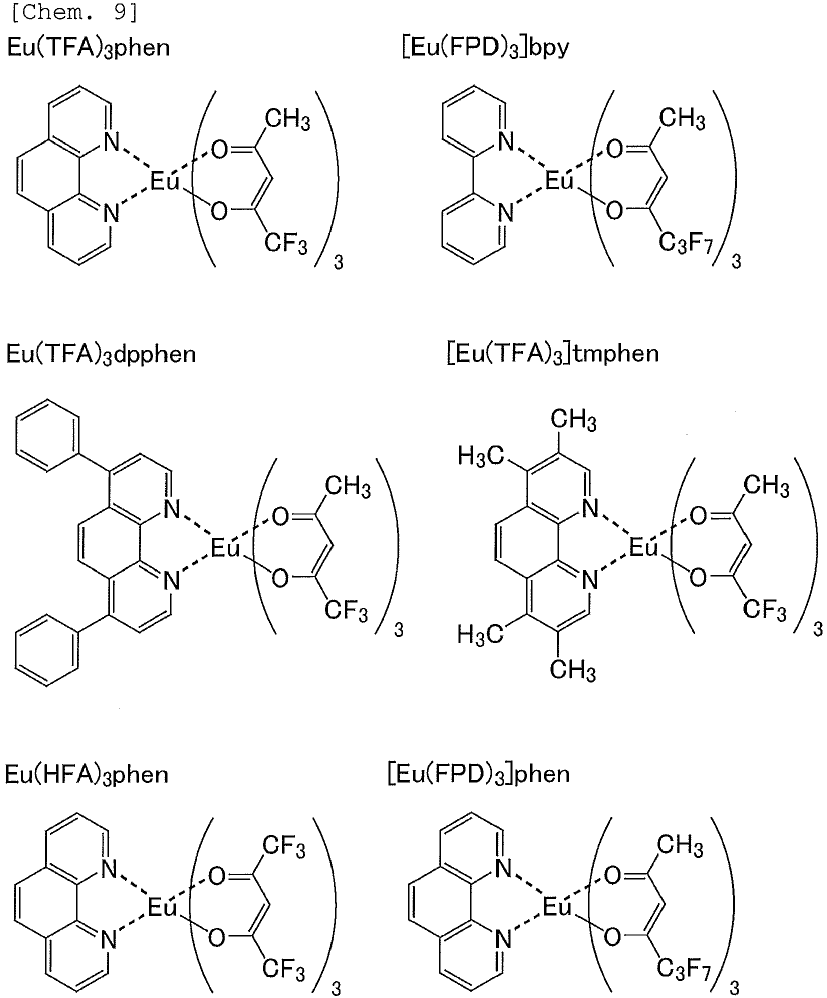

Other examples of the lanthanoid complex with a bidentate ligand containing a halogen atom and having an acetylacetone skeleton include Tb(TFA)₃phen, Tb(TFA)₃dpphen, Tb(HFA)₃phen, [Tb(FPD)₃]bpy, [Tb(TFA)₃]tmphen, and [Tb(FPD)₃]phen.

The lanthanoid complex with a ligand containing a halogen atom is preferably in the form of particles. The lanthanoid complex with a ligand containing a halogen atom in the form of particles can be readily finely dispersed in a binder resin.

In the case where the lanthanoid complex with a ligand containing a halogen atom is in the form of particles, the lower limit of the average particle size of the lanthanoid complex is preferably 0.01 µm and the upper limit thereof is preferably 10 µm. The lower limit is more preferably 0.03 µm and the upper limit is more preferably 1 µm.

The luminescent material used may be a luminescent material having a terephthalic acid ester structure. The luminescent material having a terephthalic acid ester structure becomes luminous in response tounder irradiation with light.

Examples of the luminescent material having a terephthalic acid ester structure include compounds having a structure represented by the formula (9) and compounds having a structure represented by the formula (10).

Each of these may be used alone or in combination of two or more thereof. 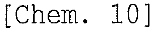 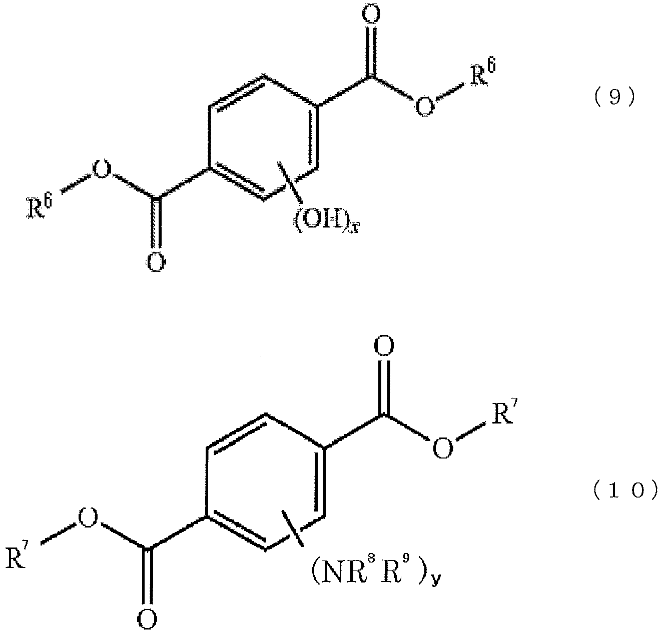 In the formula (9), R⁶ is an organic group and x is 1, 2, 3, or 4.

For higher transparency of the luminescent display, x is preferably 1 or 2, and the luminescent material has a hydroxy group more preferably at 2 or 5 position of the benzene ring, still more preferably at 2 and 5 positions of the benzene ring.

The organic group of R⁶ is preferably a hydrocarbon group, more preferably a C1-C10 hydrocarbon group, still more preferably a C1-C5 hydrocarbon group, particularly preferably a C1-C3 hydrocarbon group.

When the hydrocarbon group has 10 or less carbon atoms, the luminescent material having a terephthalic acid ester structure can be easily dispersed in a binder resin.

The hydrocarbon group is preferably an alkyl group.

Examples of the compound having a structure represented by the formula (9) include diethyl-2,5-dihydroxyterephthalate and dimethyl-2,5-dihydroxyterephthalate. In particular, for display of an image at even higher luminance, the compound having a structure represented by the formula (9) is preferably diethyl-2,5-dihydroxylterephthalate ("diethyl 2,5-dihydroxyterephthalate" available from Sigma-Aldrich).

In the formula (10), R⁷ is an organic group, R⁸ and R⁹ each are a hydrogen atom or an organic group, and y is 1, 2, 3, or 4.

The organic group of R⁷ is preferably a hydrocarbon group, more preferably a C1-C10 hydrocarbon group, still more preferably a C1-C5 hydrocarbon group, particularly preferably a C1-C3 hydrocarbon group.

When the hydrocarbon group has a carbon number satisfying the upper limit, the luminescent material having a terephthalic acid ester structure can be easily dispersed in a binder resin.

The hydrocarbon group is preferably an alkyl group.

In the formula (10), NR⁸R⁹ is an amino group. R⁸ and R⁹ each are preferably a hydrogen atom.

The benzene ring in the compound having a structure represented by the formula (10) may have the amino group(s) at the position(s) of one hydrogen atom, two hydrogen atoms, three hydrogen atoms, or four hydrogen atoms among hydrogen atoms of the benzene ring.

For display of an image at even higher luminance, the compound having a structure represented by the formula (10) is preferably diethyl-2,5-diaminoterephthalate (available from Sigma-Aldrich).

The luminescent layer preferably contains a thermoplastic resin as a binder resin.

Any thermoplastic resin may be used, and examples thereof include polyvinyl acetal resins, ethylene-vinyl acetate copolymer resins, ethylene-acryl copolymer resins, polyurethane resins, polyurethane resins containing sulfur element, polyvinyl alcohol resins, vinyl chloride resins, and polyethylene terephthalate resins. Suitable among these are polyvinyl acetal resins because a polyvinyl acetal resin used in combination with a plasticizer can exhibit excellent adhesion to glass in the case where the luminescent display of the present invention is used as an interlayer film for a laminated glass.

The polyvinyl acetal resin is not particularly limited as long as it is obtained by acetalization of polyvinyl alcohol with an aldehyde, and is preferably polyvinyl butyral. Two or more kinds of polyvinyl acetal resins may be used in combination as needed.

The lower limit of the degree of acetalization of the polyvinyl acetal resin is preferably 40 mol% and the upper limit thereof is preferably 85 mol%. The lower limit is more preferably 60 mol% and the upper limit is more preferably 75 mol%.

In the case where the luminescent display of the present invention is used as an interlayer film for a laminated glass, the lower limit of the hydroxy group content of the polyvinyl acetal resin is preferably 15 mol% and the upper limit thereof is preferably 35 mol%. When the hydroxy group content is 15 mol% or more, formation of the interlayer film for a laminated glass is facilitated. When the hydroxy group content is 35 mol% or less, the interlayer film for a laminated glass to be obtained is easy to handle.

The degree of acetalization and the hydroxy group content can be measured in accordance with, for example, "Testing methods for polyvinyl butyral" in JIS K 6728.

The polyvinyl acetal resin can be prepared by acetalization of polyvinyl alcohol with an aldehyde. The polyvinyl alcohol is normally prepared by saponifying polyvinyl acetate. Polyvinyl alcohol commonly used has a degree of saponification of 70 to 99.8 mol%.

The lower limit of the degree of polymerization of the polyvinyl alcohol is preferably 500 and the upper limit thereof is preferably 4,000. When the polyvinyl alcohol has a degree of polymerization of 500 or more, the laminated glass produced using the luminescent display of the present invention as an interlayer film for a laminated glass has higher penetration resistance. When the polyvinyl alcohol has a degree of polymerization of 4,000 or less, formation of the interlayer film for a laminated glass is facilitated. The lower limit of the degree of polymerization of the polyvinyl alcohol is more preferably 1,000 and the upper limit thereof is more preferably 3,600.

The aldehyde is not particularly limited. Commonly, preferred is a C1-C10 aldehyde. The C1-C10 aldehyde is not particularly limited, and examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. Preferred among these are n-butyraldehyde, n-hexylaldehyde, and n-valeraldehyde, and more preferred is n-butyraldehyde. These aldehydes may be used alone or in combination of two or more thereof.

The lower limit of the amount of the luminescent material in the luminescent layer is preferably 0.001 parts by weight and the upper limit thereof is preferably 15 parts by weight, relative to 100 parts by weight of the thermoplastic resin. When the amount of the luminescent material is 0.001 parts by weight or more, an image can be displayed at even higher luminance. When the amount of the luminescent material is 15 parts by weight or less, the transparency of the luminescent display is further improved. The lower limit of the amount of the luminescent material is more preferably 0.01 parts by weight and the upper limit thereof is more preferably 10 parts by weight. The lower limit is still more preferably 0.05 parts by weight and the upper limit is still more preferably 8 parts by weight. The lower limit is particularly preferably 0.1 parts by weight and the upper limit is particularly preferably 5 parts by weight. The upper limit is most preferably 1 part by weight.

The luminescent layer preferably further contains a dispersant. The use of a dispersant can inhibit aggregation of the luminescent material, leading to further uniform luminescence.

The dispersant used may be, for example, a compound having a sulfonic acid structure such as linear alkyl benzene sulfonates; a compound having an ester structure such as diester compounds, ricinoleic acid alkyl esters, phthalic acid esters, adipic acid esters, sebacic acid esters, and phosphoric acid esters; a compound having an ether structure such as polyoxyethylene glycols, polyoxypropylene glycols, and alkyl phenyl-polyoxyethylene-ethers; a compound having a carboxylic acid structure such as polycarboxylic acids; a compound having an amine structure such as laurylamine, dimethyllaurylamine, oleyl propylenediamine, polyoxyethylene secondary amine, polyoxyethylene tertiary amine, and polyoxyethylene diamine; a compound having a polyamine structure such as polyalkylene polyamine alkylene oxide; a compound having an amide structure such as oleic acid diethanolamide and alkanol fatty acid amide; and a compound having a high-molecular-weight amide structure such as polyvinylpyrrolidone and polyester acid amidoamine salt. Also, the dispersant used may be a high-molecular-weight dispersant such as polyoxyethylene alkyl ether phosphoric acid (salt), high-molecular-weight polycarboxylic acids, and condensed ricinoleic acid esters. The high-molecular-weight dispersant is defined as a dispersant having a molecular weight of 10,000 or higher.

In the case where the dispersant is used, the lower limit of the amount of the dispersant relative to the luminescent material in the luminescent layer is preferably 1 part by weight and the upper limit thereof is preferably 50 parts by weight. When the amount of the dispersant is within the above range, the luminescent material can be uniformly dispersed in a binder resin. The lower limit of the amount of the dispersant is more preferably 3 parts by weight and the upper limit thereof is more preferably 30 parts by weight. The lower limit is still more preferably 5 parts by weight and the upper limit is still more preferably 25 parts by weight.

The luminescent layer may further contain an ultraviolet absorber. The luminescent layer containing an ultraviolet absorber increases the light resistance of the luminescent display.

For displaying an image at even higher luminance, the upper limit of the amount of the ultraviolet absorber in the luminescent layer is preferably 1 part by weight, more preferably 0.5 parts by weight, still more preferably 0.2 parts by weight, particularly preferably 0.1 parts by weight, relative to 100 parts by weight of the thermoplastic resin.

Examples of the ultraviolet absorber include compounds having a malonic acid ester structure, compounds having an oxanilide structure, compounds having a benzotriazole structure, compounds having a benzophenone structure, compounds having a triazine structure, compounds having a benzoate structure, and compounds having a hindered amine structure.

The luminescent layer may further contain a plasticizer.

Any plasticizer may be used, and examples thereof include organic ester plasticizers such as monobasic organic acid esters and polybasic organic acid esters, and phosphoric acid plasticizers such as organophosphate plasticizers and organophosphite plasticizers. The plasticizer is preferably a liquid plasticizer.

The monobasic organic acid esters are not particularly limited, and examples thereof include glycol esters obtained by a reaction between a glycol and a monobasic organic acid. Examples of the glycol include triethylene glycol, tetraethylene glycol, and tripropylene glycol. Examples of the monobasic organic acid include butyric acid, isobutyric acid, caproic acid, 2-ethylbutyric acid, heptylic acid, n-octylic acid, 2-ethylhexylic acid, pelargonic acid (or n-nonylic acid), and decylic acid. In particular, preferred are triethylene glycol dicaproic acid ester, triethylene glycol-di-2-ethylbutyric acid ester, triethylene glycol-di-n-octylic acid ester, and triethylene glycol-di-2-ethylhexylic acid ester.

The polybasic organic acid esters are not particularly limited, and examples thereof include ester compounds of a polybasic organic acid (e.g., adipic acid, sebacic acid, azelaic acid) with a C4-C8 linear or branched alcohol. In particular, preferred are dibutyl sebacic acid ester, dioctyl azelaic acid ester, and dibutyl carbitol adipic acid ester.

The organic ester plasticizers are not particularly limited, and examples thereof include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicapriate, dihexyl adipate, dioctyl adipate, hexylcyclohexyl adipate, diisononyl adipate, heptylnonyl adipate, dibutyl sebacate, modified sebacic alkyd, mixtures of phosphoric acid esters and adipic acid esters, adipic acid esters, mixed type adipic acid esters prepared from C4-C9 alkyl alcohols and C4-C9 cyclic alcohols, and C6-C8 adipic acid esters such as hexyl adipate.

The organophosphate plasticizers are not particularly limited, and examples thereof include tributoxyethyl phosphate, isodecylphenyl phosphate, and triisopropyl phosphate.

Among these, the plasticizer is preferably at least one selected from the group consisting of dihexyl adipate (DHA), triethylene glycol di-2-ethylhexanoate (3GO), tetraethylene glycol di-2-ethylhexanoate (4GO), triethylene glycol di-2-ethylbutyrate (3GH), tetraethylene glycol di-2-ethylbutyrate (4GH), tetraethylene glycol di-n-heptanoate (4G7), and triethylene glycol di-n-heptanoate (3G7).

For less hydrolysis, the plasticizer preferably contains triethylene glycol di-2-ethylhexanoate (3GO), triethylene glycol di-2-ethylbutyrate (3GH), tetraethylene glycol di-2-ethylhexanoate (4GO), or dihexyl adipate (DHA), more preferably tetraethylene glycol di-2-ethylhexanoate (4GO) or triethylene glycol di-2-ethylhexanoate (3GO), still more preferably triethylene glycol di-2-ethylhexanoate (3GO).

The amount of the plasticizer in the luminescent layer is not particularly limited. The lower limit thereof is preferably 30 parts by weight and the upper limit thereof is preferably 100 parts by weight relative to 100 parts by weight of the thermoplastic resin. When the amount of the plasticizer is 30 parts by weight or more, the luminescent layer has a lower melt viscosity, facilitating formation of the luminescent display. When the amount of the plasticizer is 100 parts by weight or less, the transparency of the luminescent display is further improved. The lower limit of the amount of the plasticizer is more preferably 35 parts by weight and the upper limit thereof is more preferably 80 parts by weight. The lower limit is still more preferably 45 parts by weight and the upper limit is still more preferably 70 parts by weight. The lower limit is particularly preferably 50 parts by weight and the upper limit is particularly preferably 63 parts by weight.

For achieving excellent light resistance, the luminescent layer preferably contains an antioxidant.

The antioxidant may be any antioxidant, and examples thereof include antioxidants having a phenol structure, antioxidants containing sulfur, and antioxidants containing phosphor.

The antioxidants having a phenol structure are antioxidants having a phenol skeleton. Examples of the antioxidants having a phenol structure include 2,6-di-t-butyl-p-cresol (BHT), butylated hydroxyanisole (BHA), 2,6-di-t-butyl-4-ethylphenol, stearyl-β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis [methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, and pentaerythritol tetrakis [3-(3,5-di-tert-butyl-4-hydroxyphenyl)propionate]. These antioxidants may be used alone or in combination of two or more thereof.

The luminescent layer may contain an adhesion modifier to adjust the adhesive force to glass.

The adhesion modifier used is suitably, for example, at least one selected from the group consisting of an alkali metal salt, an alkaline earth metal salt, and a magnesium salt. Examples of the adhesion modifier include salts of potassium, sodium, magnesium, and the like.

Examples of an acid constituting the salts include organic acids such as carboxylic acids (e.g., octylic acid, hexylic acid, 2-ethylbutyric acid, butyric acid, acetic acid, formic acid) and inorganic acids such as hydrochloric acid and nitric acid.

The luminescent layer may contain, if needed, additives such as light stabilizers, antistatic agents, blue pigments, blue dyes, green pigments, and green dyes.

The thickness of the luminescent layer is not particularly limited. The lower limit thereof is preferably 100 µm and the upper limit thereof is preferably 2,000 µm. When the thickness of the luminescent layer is within this range, an image can be displayed at high luminance. The lower limit of the thickness of the luminescent layer is more preferably 300 µm, still more preferably 350 µm. The upper limit thereof is more preferably 1,000 µm, still more preferably 900 µm.

The luminescent display of the present invention includes a reflecting layer. The luminescent display combining the reflecting layer and the luminescent layer can display a three-dimensional image under light irradiation despite being thin, light, and highly simply structured.

The reflecting layer is not particularly limited as long as it has the property of reflecting visible light. The reflecting layer preferably has a visible light reflectance of 10% or higher and 90% or lower. When the visible light reflectance is within this range, a three-dimensional image can be more reliably displayed. The lower limit of visible light reflectance is more preferably 20% and the upper limit thereof is more preferably 80%.

The "visible light reflectance" herein means a value measured in conformity with JIS R 3106.

The reflecting layer preferably has a visible light transmittance of 30% or higher and 95% or lower. When the visible light transmittance of the reflecting layer is within this range, the luminescent display not only can display a three-dimensional image, but also can exhibit excellent transparency, so that the luminescent display can be widely used in, for example, front, side, and rear windshields of vehicles including automobiles and windowpanes of aircraft, buildings, or the like. The lower limit of the visible light transmittance of the reflecting layer is more preferably 50% and the upper limit thereof is more preferably 90%.

The "visible light transmittance" herein means a value measured in accordance with JIS R 3106.

The thickness of the reflecting layer is not particularly limited. The lower limit thereof is preferably 10 µm and the upper limit thereof is preferably 1,000 µm. When the thickness of the reflecting layer is within this range, a three-dimensional image can be more reliably displayed. The lower limit of the thickness of the reflecting layer is more preferably 30 µm. The upper limit thereof is more preferably 200 µm, still more preferably 100 µm.

The reflecting layer may be a commercial product such as a combiner film (available from Defi, DF05702).

The luminescent display of the present invention preferably further includes a transparent layer between the luminescent layer and the reflecting layer. With the transparent layer, the thickness of the transparent layer increases the gap between the image from the luminescent layer and the image from the reflecting layer. The images are thus perceived as a more three-dimensional image by a viewer on the luminescent layer side. In addition, with the transparent layer, the luminescent display of the present invention exhibits increased strength, thus improving the handleability.

The transparent layer is not particularly limited as long as it is transparent. Examples thereof include glass plates and organic plastic plates such as polyethylene terephthalate plates, polycarbonate plates, and polyacrylate plates. Preferred among them are glass plates.

The thickness of the transparent layer is not particularly limited. The lower limit thereof is preferably 300 µm and the upper limit thereof is preferably 1,000 µm. When the thickness of the transparent layer is within this range, a more three-dimensional image can be displayed. The lower limit of the thickness of the transparent layer is more preferably 350 µm and the upper limit thereof is more preferably 900 µm.

The luminescent display of the present invention may have a space between the luminescent layer and the reflecting layer. Forming a space between the luminescent layer and the reflecting layer increases the gap between the image from the luminescent layer and the image from the reflecting layer. The images are thus perceived as a more three-dimensional image by a viewer on the luminescent layer side.

From the viewpoint of obtaining a more three-dimensional image, the width of the space between the luminescent layer and the reflecting layer (distance between the luminescent layer and the reflecting layer) is preferably 300 µm or more, more preferably 1 mm or more, still more preferably 1 cm or more. The upper limit of the width of the space between the luminescent layer and the reflecting layer is not particularly limited. From the viewpoint of minimizing uncomfortable feelings created in three-dimensional viewing, the width of the space is preferably 5 m or less, more preferably 1 m or less, still more preferably 10 cm or less.

The luminescent display may have a transparent supporting plate on one or both surfaces of the laminate including the luminescent layer and the reflecting layer. With the transparent supporting plate, the luminescent display of the present invention exhibits increased strength, thus improving the handleability.

The transparent supporting plate is not particularly limited as long as it is transparent. Examples thereof include glass plates and organic plastic plates such as polyethylene terephthalate plates, polycarbonate plates, and polyacrylate plates. Preferred among them are glass plates.

The luminescent display of the present invention is thin, light, and simply structured, and is capable of displaying a three-dimensional image under light irradiation.

The light sources for irradiating the luminescent display of the present invention with light are the following: a light source configured to emit light of excitation wavelength for the luminescent material (hereinafter also referred to as an "excitation light source"); and a light source configured to emit visible light to be reflected by the reflecting layer (hereinafter also referred to as a "visible light source"). The excitation light source and visible light source may be both included in one irradiation device, or at least one irradiation device including the excitation light source may be used in combination with at least one irradiation device including the visible light source. Alternatively, two or more irradiation devices each including both the excitation light source and visible light source may be used.

The excitation light source is preferably disposed on the luminescent layer side of the luminescent display of the present invention. The visible light source may be disposed on either the luminescent layer side or reflecting layer side of the luminescent display of the present invention.

The light emitted from the excitation light source includes light of excitation wavelength for the luminescent material, and is determined in accordance with the type of the luminescent material. Examples of the excitation light source include a spot light source (e.g., "LC-8" available from Hamamatsu Photonixs K.K.), a xenon flash lamp (e.g., "CW lamp" available from Heraeus Holding), and a black light ("Carry hand" available from Iuchi Seieido Co., Ltd.).

The output power of the light emitted from the excitation light source is not particularly limited, and is preferably 10 mW/cm² or higher. Irradiation with light at 10 mW/cm² or higher enables display of an image at higher luminance. The lower limit of the output power of the emitted light is more preferably 30 mW/cm², still more preferably 50 mW/cm², particularly preferably 100 mW/cm². The upper limit of the output power of the emitted light is not particularly limited. From the standpoint of avoiding unnecessary size increase of the device, the output power is preferably 1,000 mW/cm² or lower.

The output power of the emitted light can be measured by the irradiation intensity measurement with a laser power meter (e.g., "Beam track power measurement sensor 3A-QUAD" available from Ophir Japan Ltd.) arranged at a position of 10 cm away from the light source.

The light emitted from the visible light source includes visible light. The visible light source is not particularly limited, and may be an irradiation device such as a commercial projector.

The luminescent display of the present invention can be widely used in, for example, front, side, and rear windshields of vehicles including automobiles and windowpanes of aircraft, buildings, or the like. The luminescent display of the present invention may be used as an interlayer film for a laminated glass, and a laminated glass may be produced using the interlayer film for a laminated glass.

The present invention also encompasses an interlayer film for a laminated glass including the luminescent display of the present invention.

The present invention also encompasses a laminated glass including a pair of glass plates and the interlayer film for a laminated glass of the present invention interposed between the pair of glass plates.

The interlayer film for a laminated glass of the present invention may have a single layer structure consisting only of the luminescent display of the present invention or a multilayer structure in which the luminescent display and different layer(s) are stacked.

In the case where the interlayer film for a laminated glass has a multilayer structure, the luminescent display of the present invention may be disposed on the entire or part of a face of the interlayer film for a laminated glass, and may be disposed on the entire or part of a face in a direction perpendicular to the thickness direction of the interlayer film for a laminated glass. In the case where the luminescent display of the present invention is partially disposed, an image can be controlled to be displayed only at the disposed part as a luminescent area without being displayed at the other part as a non-luminescent area.

In the case where the interlayer film for a laminated glass has a multilayer structure, an interlayer film for a laminated glass with various functions can be produced by controlling the components constituting the luminescent display of the present invention and a different layer.

For example, in order to impart sound insulation properties to the interlayer film for a laminated glass, the amount of the plasticizer (hereafter, also referred to as amount X) relative to 100 parts by weight of the thermoplastic resin in the luminescent display of the present invention may be controlled to be more than the amount of the plasticizer (hereafter, also referred to as amount Y) relative to 100 parts by weight of the thermoplastic resin in the different layer. In this case, the amount X is more than the amount Y preferably by 5 parts by weight or more, more preferably by 10 parts by weight or more, still more preferably by 15 parts by weight or more. For allowing the interlayer film for a laminated glass to have higher penetration resistance, the difference between the amount X and the amount Y is preferably 50 parts by weight or less, more preferably 40 parts by weight or less, still more preferably 35 parts by weight or less. The difference between the amount X and the amount Y is calculated based on the equation: (difference between the amount X and the amount Y) = (the amount X - the amount Y).

The lower limit of the amount X is preferably 45 parts by weight and the upper limit thereof is preferably 80 parts by weight. The lower limit is more preferably 50 parts by weight and the upper limit is more preferably 75 parts by weight. The lower limit is still more preferably 55 parts by weight and the upper limit is still more preferably 70 parts by weight. When the amount X is adjusted to the preferable lower limit or more, high sound insulation properties can be exerted. When the amount X is adjusted to the preferable upper limit or less, the plasticizer can be prevented from bleeding out, so that a reduction in the transparency or the adhesiveness of the interlayer film for a laminated glass can be prevented.

The lower limit of the amount Y is preferably 20 parts by weight and the upper limit thereof is preferably 45 parts by weight. The lower limit is more preferably 30 parts by weight and the upper limit is more preferably 43 parts by weight. The lower limit is still more preferably 35 parts by weight and the upper limit is still more preferably 41 parts by weight. When the amount Y is adjusted to the preferable lower limit or more, high penetration resistance can be exerted. When the amount Y is adjusted to the preferable upper limit or less, the plasticizer can be prevented from bleeding out, so that a reduction in the transparency or the adhesiveness of the interlayer film for a laminated glass can be prevented.

In order to impart sound insulation properties to the interlayer film for a laminated glass of the present invention, the thermoplastic resin in the luminescent display of the present invention is preferably a polyvinyl acetal X. The polyvinyl acetal X can be prepared by acetalization of polyvinyl alcohol with an aldehyde. The polyvinyl alcohol can be commonly prepared by saponification of polyvinyl acetate. The lower limit of the average degree of polymerization of the polyvinyl alcohol is preferably 200 and the upper limit thereof is preferably 5,000. When the average degree of polymerization of the polyvinyl alcohol is 200 or higher, the penetration resistance of the interlayer film for a laminated glass to be obtained can be improved. When the average degree of polymerization of the polyvinyl alcohol is 5,000 or lower, formability of the luminescent display can be ensured. The lower limit of the average degree of polymerization of the polyvinyl alcohol is more preferably 500 and the upper limit thereof is more preferably 4,000. The average degree of polymerization of the polyvinyl alcohol is determined by a method in accordance with "Testing methods for polyvinyl alcohol" in JIS K 6726.

The lower limit of the carbon number of an aldehyde used for acetalization of the polyvinyl alcohol is preferably 4 and the upper limit thereof is preferably 6. When an aldehyde having 4 or more carbon atoms is used, a sufficient amount of the plasticizer can be stably contained so that excellent sound insulation properties can be obtained. Moreover, bleeding out of the plasticizer can be prevented. When an aldehyde having 6 or less carbon atoms is used, synthesis of the polyvinyl acetal X is facilitated to ensure the productivity. The C4-C6 aldehyde may be a linear or branched aldehyde, and examples thereof include n-butyraldehyde and n-valeraldehyde.

The upper limit of the hydroxy group content of the polyvinyl acetal X is preferably 30 mol%. When the hydroxy group content of the polyvinyl acetal X is 30 mol% or less, the plasticizer can be contained in an amount needed for exhibiting sound insulation properties, and bleeding out of the plasticizer can be prevented. The upper limit of the hydroxy group content of the polyvinyl acetal X is more preferably 28 mol%, still more preferably 26 mol%, particularly preferably 24 mol%, and the lower limit thereof is preferably 10 mol%, more preferably 15 mol%, still more preferably 20 mol%.

The hydroxy group content of the polyvinyl acetal X is a value in percentage (mol%) of the mol fraction obtained by dividing the amount of ethylene groups to which hydroxy groups are bonded by the amount of all the ethylene groups in the main chain. The amount of ethylene groups to which hydroxy groups are bonded can be determined by measuring the amount of ethylene groups to which hydroxy groups are bonded in the polyvinyl acetal X by a method in accordance with "Testing methods for polyvinyl butyral" in JIS K 6728.

The lower limit of the acetal group content of the polyvinyl acetal X is preferably 60 mol% and the upper limit thereof is preferably 85 mol%. When the acetal group content of the polyvinyl acetal X is 60 mol% or more, the luminescent display of the present invention has higher hydrophobicity and can contain the plasticizer in an amount needed for exhibiting sound insulation properties, and bleeding out of the plasticizer and whitening can be prevented. When the acetal group content of the polyvinyl acetal X is 85 mol% or less, synthesis of the polyvinyl acetal X is facilitated to ensure the productivity. The lower limit of the acetal group content of the polyvinyl acetal X is more preferably 65 mol%, still more preferably 68 mol% or more.

The acetal group content can be determined by measuring the amount of ethylene groups to which acetal groups are bonded in the polyvinyl acetal X by a method in accordance with "Testing methods for polyvinyl butyral" in JIS K 6728.

The lower limit of the acetyl group content of the polyvinyl acetal X is preferably 0.1 mol% and the upper limit thereof is preferably 30 mol%. When the acetyl group content of the polyvinyl acetal X is 0.1 mol% or more, the plasticizer can be contained in an amount needed for exhibiting sound insulation properties, and bleeding out of the plasticizer can be prevented. When the acetyl group content of the polyvinyl acetal X is 30 mol% or less, the luminescent layer has higher hydrophobicity to prevent whitening. The lower limit of the acetyl group content of the polyvinyl acetal X is more preferably 1 mol%, still more preferably 5 mol%, particularly preferably 8 mol%, and the upper limit thereof is more preferably 25 mol%, still more preferably 20 mol%.

The acetyl group content is a value in percentage (mol%) of the mol fraction obtained by subtracting the amount of ethylene groups to which acetal groups are bonded and the amount of ethylene groups to which hydroxy groups are bonded from the amount of all the ethylene groups in the main chain and dividing the resulting value by the amount of all the ethylene groups in the main chain.

The polyvinyl acetal X is preferably a polyvinyl acetal with the acetyl group content of 8 mol% or more or a polyvinyl acetal with the acetyl group content of less than 8 mol% and the acetal group content of 65 mol% or more. In this case, the luminescent display of the present invention can readily contain the plasticizer in an amount needed for exhibiting sound insulation properties. The polyvinyl acetal X is more preferably a polyvinyl acetal having the acetyl group content of 8 mol% or more or a polyvinyl acetal having the acetyl group content of less than 8 mol% and the acetal group content of 68 mol% or more.

In order to impart sound insulation properties to the interlayer film for a laminated glass of the present invention, the thermoplastic resin in the different layer is preferably a polyvinyl acetal Y. The polyvinyl acetal Y preferably has a greater hydroxy group content than the polyvinyl acetal X.

The polyvinyl acetal Y can be prepared by acetalization of polyvinyl alcohol with an aldehyde. The polyvinyl alcohol can be commonly obtained by saponification of polyvinyl acetate. The lower limit of the average degree of polymerization of the polyvinyl alcohol is preferably 200 and the upper limit thereof is preferably 5,000. When the average degree of polymerization of the polyvinyl alcohol is 200 or more, the penetration resistance of the interlayer film for a laminated glass can be improved. When the average degree of polymerization of the polyvinyl alcohol is 5,000 or less, the formability of the different layer can be ensured. The lower limit of the average degree of polymerization of the polyvinyl alcohol is more preferably 500 and the upper limit thereof is more preferably 4,000.

The lower limit of the carbon number of an aldehyde used for acetalization of the polyvinyl alcohol is preferably 3 and the upper limit thereof is preferably 4. When the aldehyde having 3 or more carbon atoms is used, the penetration resistance of the interlayer film for a laminated glass is improved. When the aldehyde having 4 or less carbon atoms is used, the productivity of the polyvinyl acetal Y is improved. The C3-C4 aldehyde may be a linear or branched aldehyde, and examples thereof include n-butyraldehyde.

The upper limit of the hydroxy group content of the polyvinyl acetal Y is preferably 33 mol% and the lower limit thereof is preferably 28 mol%. When the hydroxy group content of the polyvinyl acetal Y is 33 mol% or less, whitening of the interlayer film for a laminated glass can be prevented. When the hydroxy group content of the polyvinyl acetal Y is 28 mol% or more, the penetration resistance of the interlayer film for a laminated glass can be improved.

The lower limit of the acetal group content of the polyvinyl acetal Y is preferably 60 mol% and the upper limit thereof is preferably 80 mol%. When the acetal group content is 60 mol% or more, the plasticizer in an amount needed for exhibiting sufficient penetration resistance can be contained. When the acetal group content is 80 mol% or less, the adhesiveness between the different layer and glass can be ensured. The lower limit of the acetal group content of the polyvinyl acetal Y is more preferably 65 mol% and the upper limit thereof is more preferably 69 mol%.

The upper limit of the acetyl group content of the polyvinyl acetal Y is preferably 7 mol%. When the acetyl group content of the polyvinyl acetal Y is 7 mol% or less, the different layer has higher hydrophobicity, thereby preventing whitening. The upper limit of the acetyl group content of the polyvinyl acetal Y is more preferably 2 mol%, and the lower limit thereof is preferably 0.1 mol%.

The hydroxy group content, acetal group content, and acetyl group content of the polyvinyl acetal Y can be measured by the same methods as those described for the polyvinyl acetal X.

In order to impart heat insulation properties to the interlayer film for a laminated glass, for example, one, two, or all of the luminescent display of the present invention and different layer(s) may contain a heat ray absorber.

The heat ray absorber is not particularly limited as long as it blocks infrared rays. Preferred is at least one selected from the group consisting of tin-doped indium oxide (ITO) particles, antimony-doped tin oxide (ATO) particles, aluminum-doped zinc oxide (AZO) particles, indium-doped zinc oxide (IZO) particles, tin-doped zinc oxide particles, silicon-doped zinc oxide particles, lanthanum hexaboride particles, and cerium hexaboride particles.

The thickness of the interlayer film for a laminated glass is not particularly limited. The lower limit of the thickness is preferably 50 µm and the upper limit thereof is preferably 1,700 µm. The lower limit is more preferably 100 µm and the upper limit is more preferably 1,000 µm. The upper limit is still more preferably 900 µm. The lower limit of the thickness of the interlayer film for a laminated glass means the thickness of the thinnest part of the interlayer film for a laminated glass. The upper limit of the thickness of the interlayer film for a laminated glass means the thickness of the thickest part of the interlayer film for a laminated glass. In the case where the interlayer film for a laminated glass has a multilayer structure, the thickness of the luminescent layer containing a luminescent material is not particularly limited. The lower limit thereof is preferably 50 µm and the upper limit is preferably 1,000 µm. When the luminescent layer containing a luminescent material has a thickness within this range, the contrast of luminescence is sufficiently high under irradiation with light having a specific wavelength. The lower limit of the thickness of the luminescent layer containing a luminescent material is more preferably 80 µm and the upper limit thereof is more preferably 500 µm. The lower limit is still more preferably 90 µm and the upper limit is still more preferably 300 µm.

The interlayer film for a laminated glass of the present invention may have a wedge-shaped cross section. In the case where the interlayer film for a laminated glass has a wedge-shaped cross section, double image phenomenon can be prevented when the interlayer film for a laminated glass is used as, for example, a head-up display. From the standpoint of reducing the double image phenomenon, the upper limit of the wedge angle θ of the wedge shape is preferably 1 mrad. In the case where the interlayer film for a laminated glass having a wedge-shaped cross section is produced by, for example, extrusion molding a resin composition using an extruder, the interlayer film may have its minimum thickness in a region slightly inward from one end on the thinner side (specifically, a region spaced inward from one end on the thinner side by a distance of 0X to 0.2X where X is the distance between the one end and the other end). The interlayer film may also have its maximum thickness in a region slightly inward from one end on the thicker side (specifically, a region spaced inward from one end on the thicker side by a distance of 0X to 0.2X where X is the distance between the one end and the other end). Herein, such a shape is included in the wedge shape.

In the case of the interlayer film for a laminated glass of the present invention having a wedge-shaped cross section, it may have a multilayer structure including the luminescent display of the present invention and a different layer (hereafter, also referred to as a "shape-adjusting layer"). The cross-sectional shape of the entire interlayer film for a laminated glass can be controlled to have a wedge shape with a certain wedge angle by controlling the thickness of the luminescent display of the present invention to be within a certain range and stacking the shape-adjusting layer. Alternatively, the cross-sectional shape of the entire interlayer film for a laminated glass can be controlled to have a wedge shape with a certain wedge angle by using the luminescent display of the present invention and the shape-adjusting layer at least one of which has a wedge shape. The shape-adjusting layer may be stacked on only one or both of the surfaces of the luminescent layer. Further, multiple shape-adjusting layers may be stacked.

The interlayer film for a laminated glass may be produced by any method. In an exemplary method, a plasticizer solution containing a plasticizer and a luminescent material is well mixed with a thermoplastic resin to prepare a resin composition for interlayer films for a laminated glass. Then, the resin composition for interlayer films for a laminated glass is extruded using an extruder to produce an interlayer film for a laminated glass.

The laminated glass includes a pair of glass plates and the interlayer film for a laminated glass interposed between the pair of glass plates.

The glass plates may be commonly used transparent plate glass. Examples thereof include inorganic glass such as float plate glass, polished plate glass, molded plate glass, wired glass, wire-reinforced plate glass, colored plate glass, heat-absorbing glass, heat-reflecting glass, and green glass. Also usable is UV light-shielding glass in which a UV light-shielding coat layer is formed on the surface of glass. However, such glass is preferably used as a glass plate on a side opposite to the side irradiated with light having a specific wavelength. Moreover, organic plastic plates such as polyethylene terephthalate, polycarbonate, or polyacrylate plates may also be used.

As the glass plates, two or more kinds of glass plates may be used. Exemplary cases thereof include a laminated glass in which the interlayer film for a laminated glass is sandwiched between a transparent float plate glass and a colored glass plate such as green glass. Moreover, as the glass plates, two or more kinds of glass plates different in the thickness may be used.

The present invention also encompasses a luminescent display system including the luminescent display of the present invention, a light source configured to emit light of excitation wavelength for the luminescent material, and a light source configured to emit visible light to be reflected by the reflecting layer.

The present invention also encompasses a luminescent display system including the interlayer film for a laminated glass of the present invention or the laminated glass of the present invention, a light source configured to emit light of excitation wavelength for the luminescent material, and a light source configured to emit visible light to be reflected by the reflecting layer.

### - Advantageous Effects of Invention

The present invention can provide a thin, light, simply structured luminescent display capable of displaying a three-dimensional image under light irradiation, and an interlayer film for a laminated glass, a laminated glass, and a luminescent display system each including the luminescent display.

### BRIEF DESCRIPTION OF DRAWINGS

Fig. 1 includes schematic views showing an exemplary luminescent display of the present invention and illustrating the principle on which the luminescent display of the present invention displays a three-dimensional image.

### DESCRIPTION OF EMBODIMENTS

The present invention is more specifically described in the following with reference to, but not limited to, examples.

### (Example 1)

### (1) Preparation of polyvinyl butyral

To a 2 m³ reactor equipped with a stirrer were charged 1,700 kg of a 7.5% by mass aqueous solution of PVA (degree of polymerization: 1,700, degree of saponification: 99 mol%), 74.6 kg of n-butyraldehyde, and 0.13 kg of 2,6-di-t-butyl-4-methyl phenol, and the entire mixture was cooled to 14°C. Subsequently, 99.44 L of 30% by mass nitric acid was added to the mixture to initiate the butyralization of PVA. Ten minutes after the end of the addition, the temperature was raised to 65°C over 90 minutes, followed by further reaction for 120 minutes. Thereafter, the temperature was lowered to room temperature, and the precipitated solid was obtained by filtration. The solid was washed ten times with a 10-fold amount (by mass) of ion exchange water. The washed solid was sufficiently neutralized using a 0.3% by mass sodium hydrogen carbonate aqueous solution and was then washed ten times with a 10-fold amount (by mass) of ion exchange water. The resulting solid was dehydrated and dried, thereby obtaining polyvinyl butyral resin (PVB).

### (2) Production of luminescent display and laminated glass

A luminescent plasticizer solution was prepared by adding 0.54 parts by weight of diethyl-2,5-dihydroxyterephthalate (available from Sigma-Aldrich, "diethyl 2,5-dihydroxyterephthalate") to 40 parts by weight of triethylene glycol di-2-ethylhexanoate (3GO). The entire amount of the obtained plasticizer solution was mixed and sufficiently kneaded with 100 parts by weight of the obtained polyvinyl butyral using a mixing roll to prepare a resin composition.

The obtained resin composition was extruded using an extruder to provide a luminescent layer having a thickness of 350 µm.

An amount of 40 parts by weight of triethylene glycol di-2-ethylhexanoate (3GO) was mixed and sufficiently kneaded with 100 parts by weight of the obtained polyvinyl butyral using a mixing roll to prepare a resin composition.

The obtained resin composition was extruded using an extruder to provide a resin film layer having a thickness of 350 µm.

A combiner film (available from Defi, DF05702) was provided as a reflecting layer. The reflecting layer was interposed between the luminescent layer and the resin film to prepare a laminated film (luminescent layer/reflecting layer/resin film layer).

The obtained laminated film as an interlayer film for a laminated glass was interposed between a pair of clear glass plates (thickness: 2.5 mm, 5 cm in length x 5 cm in width) to prepare a laminate. The laminate was pressed under vacuum at 90°C for 30 minutes to be press-bonded using a vacuum laminator. The press-bonded laminate was subjected to further 20-minute press-bonding under 14 MPa at 140°C using an autoclave, thereby obtaining a laminated glass.

### (Example 2)

Europium acetate (Eu(CH₃COO)₃) in an amount of 12.5 mmol was dissolved in 50 mL of distilled water. To the solution was added 33.6 mmol of trifluoroacetylacetone (TFA, CH₃COCH₂COCF₃), and the mixture was stirred at room temperature for 3 hours. The mixture was filtered to obtain precipitated solid. The precipitated solid was washed with water, and recrystallized using methanol and distilled water to give Eu(TFA)₃(H₂O)₂. Then, 5.77 g of the resulting complex (Eu(TFA)₃(H₂O)₂) and 2.5 g of 1,10-phenanthroline(phen) were dissolved in 100 mL of methanol, followed by heating under reflux for 12 hours. After 12 hours, methanol was distilled off under reduced pressure, thereby obtaining a white product. The white product powder was washed with toluene so that unreacted materials were removed by suction filtration. Subsequently, toluene was distilled off under reduced pressure, thereby preparing a powder. Through recrystallization using a solvent mixture of toluene and hexane, Eu(TFA)₃phen was obtained.

A luminescent display and a laminated glass were produced as in Example 1 except that instead of 0.54 parts by weight of diethyl-2,5-dihydroxyterephthalate (available from Sigma-Aldrich, "diethyl 2,5-dihydroxyterephthalate"), 0.4 parts by weight of the obtained Eu(TFA)₃phen was added to 40 parts by weight of 3GO.

### (Example 3)

Terbium acetate (Tb(CH₃COO)₃) in an amount of 12.5 mmol was dissolved in 50 mL of distilled water. To the solution was added 33.6 mmol of trifluoroacetylacetone (TFA, CH₃COCH₂COCF₃), and the mixture was stirred at room temperature for 3 hours. The mixture was filtered to obtain precipitated solid. The precipitated solid was washed with water, and recrystallized using methanol and distilled water to give Tb(TFA)₃(H₂O)₂. Then, 5.77 g of the obtained complex (Tb(TFA)₃(H₂O)₂) and 2.5 g of 1,10-phenanthroline(phen) were dissolved in 100 mL of methanol, followed by heating under reflux for 12 hours. After 12 hours, methanol was distilled off under reduced pressure, thereby obtaining a white product. The white product powder was washed with toluene so that unreacted materials were removed by suction filtration. Subsequently, toluene was distilled off under reduced pressure, thereby preparing a powder. Through recrystallization using a solvent mixture of toluene and hexane, Tb(TFA)₃phen was obtained.

A luminescent display and a laminated glass were produced as in Example 1 except that instead of 0.54 parts by weight of diethyl-2,5-dihydroxyterephthalate (available from Sigma-Aldrich, "diethyl 2,5-dihydroxyterephthalate"), 0.4 parts by weight of the obtained Tb(TFA)₃phen was added to 40 parts by weight of 3GO.

### (Comparative Example 1)

A luminescent display and a laminated glass were produced as in Example 1 except that no reflecting layer was used.

### (Comparative Example 2)

A luminescent display and a laminated glass were produced as in Example 1 except that a resin film layer was used instead of the luminescent layer to prepare a laminated film (resin film layer/reflecting layer/resin film layer), and that this laminated film was used.

### (Evaluation)

The laminated glasses obtained in the examples and comparative examples were evaluated by the following method.

Table 1 shows the results.

### (Evaluation of three-dimensional image display)

Each of the laminated glasses obtained in the examples and comparative examples in a size of 5 cm in length × 5 cm in width was placed in a dark room. The light sources were placed 10 cm away in the perpendicular direction from a surface of the laminated glass. Subsequently, a viewer was placed on the side to be irradiated with light, at an angle of 20 degrees relative to the surface of the laminated glass to be irradiated with light and at a shortest distance of 35 cm from the surface of the laminated glass. The laminated glass was then irradiated with light from the irradiation device. The viewer observed an image displayed on the laminated glass, and evaluated the image according to the following criteria. In Comparative Example 2, no image was displayed. ○ (Good): A three-dimensional image was displayed. × (Poor): No three-dimensional image was displayed.

**[Table 1]**

| | | | Example 1 | Example 2 | Example 3 | Comparative Example 1 | Comparative Example 2 |
|---|---|---|---|---|---|---|---|
| Luminescent layer | Thermoplastic resin | Type | PVB | PVB | PVB | PVB | - |
| | | Amount (parts by weight) | 100 | 100 | 100 | 100 | - |
| | Plasticizer | Type | 3GO | 3GO | 3GO | 3GO | - |
| | | Amount (parts by weight) | 40 | 40 | 40 | 40 | - |
| | Luminescent material | Type | Diethyl 2,5-dihydroxyterephthalate | Eu(TFA)₃phen | Tb(TFA)₃phen | Dimethyl 2,5-dihydroxyterephthalate | - |
| | | Amount (parts by weight) | 0.54 | 0.4 | 0.4 | 0.54 | - |
| | Thickness | | 350 | 350 | 350 | 350 | - |
| Reflecting layer | Type | | Combiner film | Combiner film | Combiner film | - | Combiner film |
| Resin film layer | Thermoplastic resin | Type | PVB | PVB | PVB | PVB | PVB |
| | | Amount (parts by weight) | 100 | 100 | 100 | 100 | 100 |
| | Plasticizer | Type | 3GO | 3GO | 3GO | 3GO | 3GO |
| | | Amount (parts by weight) | 40 | 40 | 40 | 40 | 40 |
| | Thickness | | 350 | 350 | 350 | 350 | 350 |
| Evaluation (Three-dimensional image display) | | | ○ | ○ | ○ | × | × |

### INDUSTRIAL APPLICABILITY

The present invention can provide a thin, light, simply structured luminescent display capable of displaying a three-dimensional image under light irradiation, and an interlayer film for a laminated glass, a laminated glass, and a luminescent display system each including the luminescent display.

### REFERENCE SIGNS LIST

1 luminescent display
11 luminescent layer
111 image formed by luminescent from the luminescent material that is made luminous by excitation light
12 reflecting layer
121 image formed by visible light reflected by reflecting layer 12
2 light source
3 viewer

## Claims

1. A luminescent display comprising:
a luminescent layer containing a luminescent material that becomes luminous in response to excitation light; and
a reflecting layer that reflects visible light.

2. The luminescent display according to claim 1,
wherein the reflecting layer has a visible light reflectance of 10% or higher and 90% or lower.

3. The luminescent display according to claim 1 or 2,
wherein the reflecting layer has a visible light transmittance of 30% or higher and 95% or lower.

4. The luminescent display according to claim 1, 2, or 3, further comprising a transparent layer between the luminescent layer and the reflecting layer.

5. An interlayer film for a laminated glass, comprising:
the luminescent display according to claim 1, 2, 3, or 4.

6. A laminated glass comprising:
a pair of glass plates; and
the interlayer film for a laminated glass according to claim 5 interposed between the pair of glass plates.

7. A luminescent display system comprising:
the luminescent display according to claim 1, 2, 3, or 4;
a light source configured to emit light of excitation wavelength for the luminescent material; and
a light source configured to emit visible light to be reflected by the reflecting layer.

8. A luminescent display system comprising:
the interlayer film for a laminated glass according to claim 5 or the laminated glass according to claim 6;
a light source configured to emit light of excitation wavelength for the luminescent material; and
a light source configured to emit visible light to be reflected by the reflecting layer.
